(19) Europäisches Patentamt
European Patent Office
Office européen des brevets

(11) **EP 4 657 853 A1**

(12) **EUROPEAN PATENT APPLICATION**
published in accordance with Art. 153(4) EPC

(43) Date of publication:
**03.12.2025 Bulletin 2025/49**

(21) Application number: **23932765.3**

(22) Date of filing: **06.11.2023**

(51) International Patent Classification (IPC):
**H04N 19/124** (2014.01)

(52) Cooperative Patent Classification (CPC):
**H04N 19/124; H04N 19/159; H04N 19/423;
H04N 19/44; H04N 19/82**

(86) International application number:
**PCT/CN2023/129906**

(87) International publication number:
**WO 2024/212494 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2023 CN 202310442864**

(71) Applicant: **ZTE Corporation
Shenzhen, Guangdong 518057 (CN)**

(72) Inventors:
• **ZHOU, Yi
Shenzhen, Guangdong 518057 (CN)**

• **GU, Chengming
Shenzhen, Guangdong 518057 (CN)**
• **ZOU, Wenjie
Shenzhen, Guangdong 518057 (CN)**
• **XIE, Shaowei
Shenzhen, Guangdong 518057 (CN)**
• **HUANG, Cheng
Shenzhen, Guangdong 518057 (CN)**

(74) Representative: **Vossius & Partner
Patentanwälte Rechtsanwälte mbB
Siebertstraße 3
81675 München (DE)**

(54) **FILTERING PARAMETER PROCESSING METHOD AND DEVICE, AND STORAGE MEDIUM**

(57) Provided are a filtering parameter processing method, a device, and a storage medium. The method includes: determining a new adaptation parameter set (APS) of a current filtering mode of a target filtering unit; after determining that the current filtering mode satisfies a decision factor correction condition, determining a corrected decision factor, where the corrected decision factor is less than a decision factor before correction; and determining, according to the corrected decision factor, whether to use the new APS of the current filtering mode.

```
┌─────────────────────────────────┐
│ Determine a new APS of a current │──── Step 601
│   filtering mode of a target     │
│         filtering unit           │
└─────────────────────────────────┘
                 │
                 ▼
┌─────────────────────────────────┐
│ After it is determined that the  │──── Step 602
│   current filtering mode satisfies│
│  a decision factor correction    │
│ condition, determine a corrected │
│          decision factor         │
└─────────────────────────────────┘
                 │
                 ▼
┌─────────────────────────────────┐
│ According to the corrected       │──── Step 603
│  decision factor, determine      │
│  whether to use the new APS of   │
│     the current filtering mode   │
└─────────────────────────────────┘
```

**FIG. 6**

## Description

TECHNICAL FIELD

The present application relates to the field of communications, for example, a filtering parameter processing method, a device, and a storage medium.

BACKGROUND

The Adaptive Loop Filter (ALF) technology is a new filtering technology added to H.266/Versatile Video Coding (VVC). The idea of the Wiener filter is adopted, the minimum mean square error (MSE) between the original frame and the reconstructed frame is the optimization goal, the Wiener-Hopf equation related to the original frame and the reconstructed frame is listed, and the final ALF filtering coefficients are obtained according to the solved results of the equation. The MSE can be reduced more directly to improve the peak signal-to-noise ratio of the image. In the ALF technology, the ALF filtering coefficients are transmitted using an ALF adaptation parameter set (APS). The ALF APS may include filtering coefficients corresponding to four filtering modes: the luma ALF APS, the chroma ALF APS, the cross-component adaptive loop filter (CCALF) Cb APS, and the CCALF Cr APS.

In the current ALF technology, for a slice, the decision processes for determining whether to adopt the new APS in the four filtering modes, namely luma ALF, chroma ALF, CCALF Cb, and CCALF Cr, are relatively independent, and the comparison and determination for each filtering mode are performed according to its own performance. During the determination process, the decision factors corresponding to the filtering modes are used for determination.

However, the current design of decision factors is suboptimal, resulting in the following: a large number of luma ALF APSs are explicitly transmitted while the chroma ALF APSs are absent. As a result, the fullness of the historical candidate sets of the ALF APSs is relatively low.

SUMMARY

An embodiment of the present application provides a filtering parameter processing method. The method includes the steps below.

A new APS of a current filtering mode of a target filtering unit is determined.

After it is determined that the current filtering mode satisfies a decision factor correction condition, a corrected decision factor is determined, where the corrected decision factor is less than a decision factor before correction.

According to the corrected decision factor, whether to use the new APS of the current filtering mode is determined.

An embodiment of the present application provides another filtering parameter processing method. The method includes the steps below.

A new APS of a current filtering mode of a target filtering unit is determined.

In response to determining that the new APS of the current filtering mode is used, target historical filtering parameters corresponding to the target filtering unit among historical filtering parameters of the current filtering mode are updated to the new APS of the current filtering mode.

In the case where the target historical filtering parameters are not empty, empty historical filtering parameters among the historical filtering parameters of the current filtering mode are updated to the target historical filtering parameters.

An embodiment of the present application provides another filtering parameter processing method. The method includes the steps below.

A new APS of a current filtering mode of a target filtering unit is acquired.

Target historical filtering parameters corresponding to the target filtering unit among historical filtering parameters of the current filtering mode are updated to the new APS of the current filtering mode.

In the case where the target historical filtering parameters are not empty, empty historical filtering parameters among the historical filtering parameters of the current filtering mode are updated to the target historical filtering parameters.

An embodiment of the present application provides an electronic device. The electronic device includes a processor. When executing a computer program, the processor performs the filtering parameter processing method of any previous embodiment.

An embodiment of the present application further provides a computer-readable storage medium storing a computer program executable by a processor to enable the processor to perform the filtering parameter processing method of any previous embodiment.

The preceding embodiments and other aspects of the present application and implementations thereof are described in more detail in the brief description of drawings, detailed description, and claims.

BRIEF DESCRIPTION OF DRAWINGS

    FIG. 1 is a block diagram of a video encoder according to an embodiment.

    FIG. 2 is a block diagram of a video decoder according to an embodiment.

    FIG. 3 is a flowchart of in-loop filtering in the H.266/VVC standard.

    FIG. 4 is a schematic diagram of the internal implementation of the ALF APS.

FIG. 5 is a schematic diagram of ALF decision candidates according to an embodiment.

FIG. 6 is a flowchart of a filtering parameter processing method according to an embodiment.

FIG. 7 is a schematic diagram of ALF APSs according to an embodiment.

FIG. 8 is a flowchart of another filtering parameter processing method according to an embodiment.

FIG. 9 is a flowchart of another filtering parameter processing method according to an embodiment.

FIG. 10 is a schematic diagram of historical candidate sets of the ALF APSs according to an embodiment.

FIG. 11 is a schematic diagram illustrating the updating of historical candidate sets according to an embodiment.

FIG. 12 is a flowchart of a filtering parameter processing method according to an embodiment.

FIG. 13 is a flowchart of another filtering parameter processing method according to an embodiment.

FIG. 14 is a flowchart illustrating empty slot filling in a filtering parameter processing method according to an embodiment.

FIG. 15 is a flowchart of another filtering parameter processing method according to an embodiment.

FIG. 16 is a diagram illustrating the structure of a filtering parameter processing apparatus according to an embodiment.

FIG. 17 is a diagram illustrating the structure of another filtering parameter processing apparatus according to an embodiment.

FIG. 18 is a diagram illustrating the structure of another filtering parameter processing apparatus according to an embodiment.

FIG. 19 is a diagram illustrating the structure of an electronic device according to an embodiment.

DETAILED DESCRIPTION

It is to be understood that the embodiments described herein are intended to explain the present application, not to limit the present application. The embodiments of the present application are described hereinafter in detail in conjunction with the drawings.

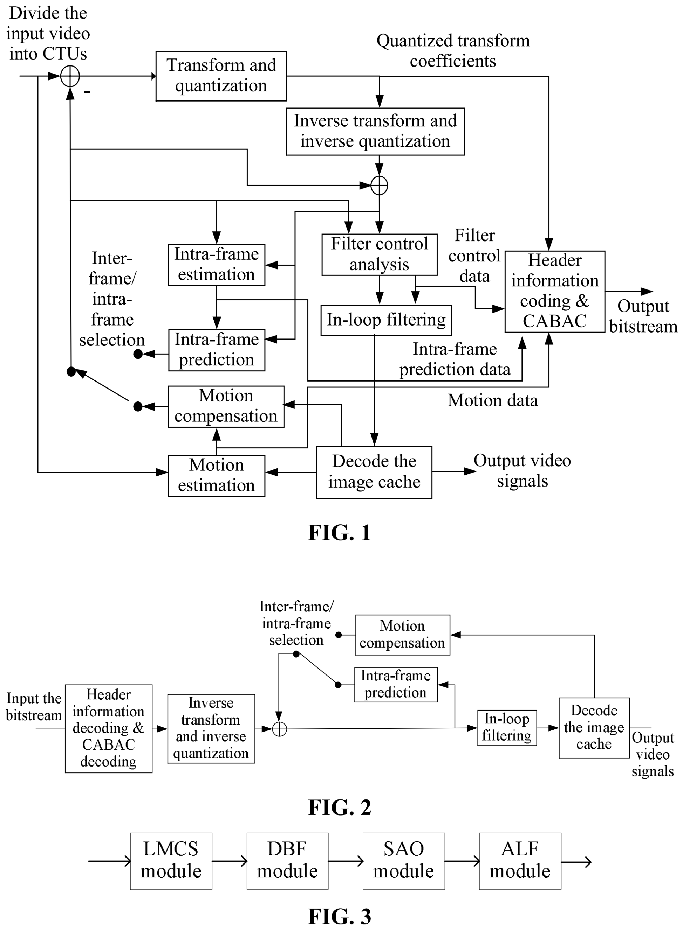

FIG. 1 is a block diagram of a video encoder according to an embodiment. A filtering parameter processing method provided in this embodiment is applicable to any video coding and decoding solution including the ALF APS. In this embodiment, the application in H.266/VVC is used as an example for description. It is to be understood that this embodiment is not limited to the application in H.266. The filtering parameter processing method provided in this embodiment may be performed based on a hybrid coding framework. As shown in FIG. 1, the H.266/VVC coding framework is a next-generation video coding standard developed under the joint video project of the International Telecommunication Union Telecommunication Standardization Sector (ITU-T) and the International Organization for Standardization (ISO)/International Electrotechnical Commission (IEC) and includes modules such as intra-frame prediction, interframe prediction, transformation, quantization, in-loop filtering, and entropy coding.

An overall framework process of an encoding end is described below. During encoding, the input video is divided into filtering units for subsequent processing. Here, the case where the filtering unit is a coding tree unit (CTU) is used as an example for description. Of course, it is to be understood that when the filtering units are of other types, the implementation processes are similar.

(1) An input video is divided into frames and then into CTUs.

(2) The CTUs obtained through division are sent to an intra-frame/inter-frame prediction module to undergo predictive coding. The intra-frame prediction module is mainly used for removing the spatial correlation of the image and predicting the current pixel block through the encoded reconstructed CTU information to remove spatial redundant information. The interframe prediction module is mainly used for removing the temporal correlation of the image and using the encoded image as the reference image of the current frame to acquire the motion information of each CTU, thereby removing temporal redundancy.

(3) An obtained intra-frame/inter-frame predictor is subtracted from an original CTU to obtain a residue, and the residue is transformed and quantized to remove frequency domain correlation and perform lossy compression on data. Transform coding transforms the image from a spatial domain signal to a frequency domain signal, concentrating the energy in the lowfrequency region. The quantization module can reduce the dynamic range of image encoding.

(4) The entropy coding is performed on all coding parameters and residues to form a binary stream for storage or transmission. Output data of the entropy coding module is a compressed bitstream of the original video. In FIG. 1, the case where entropy coding is contextbased adaptive binary arithmetic coding (CABAC) and header information coding is used as an example.

(5) The intra-frame/inter-frame predictor is added to the residue subjected to the inverse quantization and inverse transform to obtain a block reconstruction value, and a reconstructed image is formed.

(6) The reconstructed image is filtered by a loop filter, stored in an image buffer, and used as a reference image in the future.

H.266/VVC adopts a CTU-based hybrid coding framework. Distortion artifacts such as blocking artifacts, ringing artifacts, color deviations, and image blurring still exist in compressed videos using the H.266/VVC standard. To reduce the impact of such distortion on video quality, in-loop filtering technology is adopted in H.266/VVC. The in-loop filtering technology in H.266/VVC includes: luma mapping with chroma scaling (LMCS), the deblocking filter (DBF), the sample adaptive offset (SAO), and the ALF. LMCS improves compression efficiency by reallocating codewords to information within the dynamic range; the DBF is used for reducing blocking artifacts; the SAO is used for reducing ringing artifacts; and the ALF can reduce decoding errors.

FIG. 2 is a block diagram of a video decoder according to an embodiment. As shown in FIG. 2, the framework process of the video decoding end is described below.

(1) A bitstream is parsed and a prediction mode is acquired to obtain an intra-frame/interframe predictor.

(2) A residue obtained after the bitstream is parsed is subjected to the inverse transform and inverse quantization.
Header information decoding and CABAC decoding are required during the parsing process.

(3) The intra-frame/inter-frame predictor is added to the residue subjected to the inverse quantization and inverse transform to obtain a CTU reconstruction value, and a reconstructed image is formed.

(4) The reconstructed image is filtered by a loop filter, stored in an image buffer, and used as a reference image in the future.

FIG. 3 is a flowchart of in-loop filtering in the H.266/VVC standard. As shown in FIG. 3, no matter at the encoding end or the decoding end, the various filtering modules in the in-loop filtering technology are connected in the following order: the LMCS module, the DBF module, the SAO module, and the ALF module, that is, the filtering order is: LMCS, DBF, SAO, and ALF.

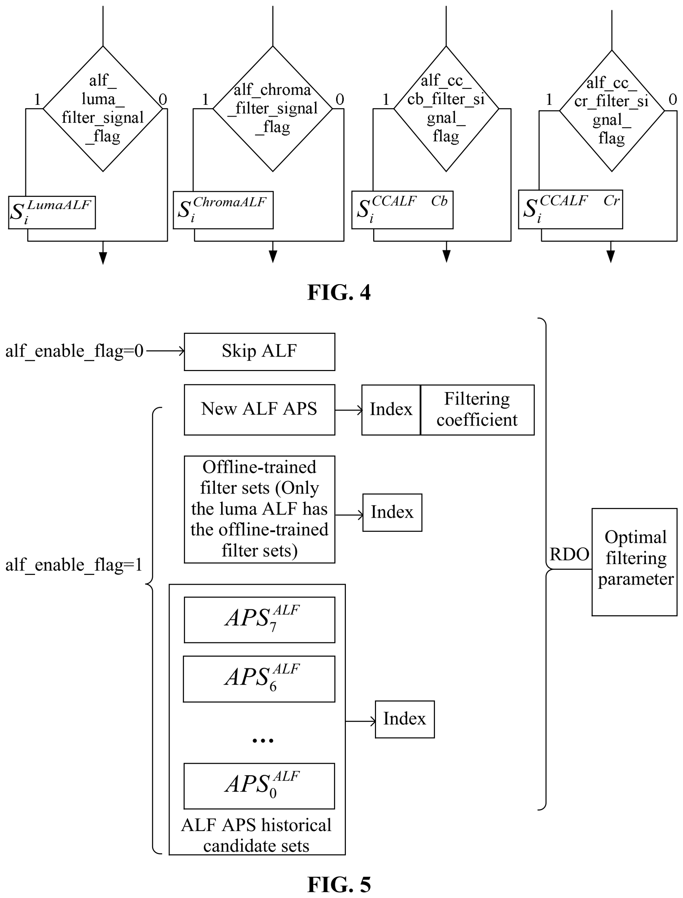

FIG. 4 is a schematic diagram of the internal implementation of the ALF APS. The ALF APS is used for transmitting ALF filtering coefficients, which may also be referred to as ALF filtering parameters. In the present application, the ALF filtering coefficients and the ALF filtering parameters refer to the same. The ALF APS may include filtering coefficients corresponding to four filtering modes: the luma ALF APS, the chroma ALF APS, the CCALF Cb APS, and the CCALF Cr APS. The ALF APS may include four modules: luma ALF, chroma ALF, CCALF Cb, and CCALF Cr. Whether the new APS of each module is used is determined independently, and each module has a corresponding identifier to indicate whether the new APS is used.

alf_luma_filter_signal_flag indicates whether filtering parameters $S_i^{LumaALF}$ related to luma ALF exist in the current ALF APS. If alf_luma_filter_signal_flag is equal to a first preset value, filtering parameters $S_i^{LumaALF}$ related to luma ALF exist in the current ALF APS; and if alf_luma_filter_signal_flag is equal to a second preset value, filtering parameters $S_i^{LumaALF}$ related to luma ALF do not exist in the current ALF APS. For example, the first preset value may be 1, and the second preset value may be 0.

alf_chroma_filter_signal_flag indicates whether filtering parameters $S_i^{ChromaALF}$ related to chroma ALF exist in the current ALF APS. If alf_chroma_filter_signal_flag is equal to the first preset value, filtering parameters $S_i^{ChromaALF}$ related to chroma ALF exist in the current ALF APS; and if alf_chroma_filter_signal_flag is equal to the second preset value, filtering parameters $S_i^{ChromaALF}$ related to chroma ALF do not exist in the current ALF APS.

alf_cc_cb_filter_signal_flag indicates whether filtering parameters $S_i^{CCALF\ Cb}$ related to the CCALF Cb mode exist in the current ALF APS. If alf_cc_cb_filter_signal_flag is equal to the first preset value, filtering parameters $S_i^{CCALF\ Cb}$ related to the CCALF Cb mode exist in the current ALF APS; and if alf_cc_cb_filter_signal_flag is equal to the second preset value, filtering parameters $S_i^{CCALF\ Cb}$ related to the CCALF Cb mode do not exist in the current ALF APS.

alf_cc_cr_filter_signal_flag indicates whether filtering parameters $S_i^{CCALF\ Cr}$ related to the CCALF Cr mode exist in the current ALF APS. If alf_ce_cr_filter_signal_flag is equal to the first preset value, filtering parameters $S_i^{CCALF\ Cr}$ related to the CCALF Cr mode exist in the current ALF APS; and if alf_ce_cr_filter_signal_flag is equal to the second preset value, filtering parameters $S_i^{CCALF\ Cr}$ related to the CCALF Cr mode do not exist in the current ALF APS.

It is to be noted that whether the filtering parameters related to the filtering modes exist in the current ALF APS refers to whether new APSs related to the filtering modes exist in the current ALF APS, that is, whether the new APSs related to the filtering modes are used. Based on the original frame and the reconstructed frame, the idea of the Wiener filter is adopted, the MSE between the original frame and the reconstructed frame is the optimization goal, the Wiener-Hopf equation related to the original frame and the reconstructed frame is listed, and the new APSs related to the filtering modes are the ALF filtering coefficients obtained according to the solved results of the equation.

Whether each filtering mode within the ALF APS uses the corresponding new APS is determined independently and needs to be determined based on a rate-distortion criterion during the decision process for each filtering mode of the ALF. If each of the four identifier decisions is the second preset value, the current filtering unit does not use the new APS of the ALF. However, once an identifier with the first preset value exists, the new APS of the ALF of the current filtering unit is used. In this embodiment, using the new APS of the ALF of the current filtering unit refers to performing filtering according to the new APS of the ALF to achieve image reconstruction. Furthermore, the new APS of the ALF may be transmitted in the bitstream. To put it simply, for the ALF APS transmitted in the bitstream, the filtering coefficients of at least one filtering mode exist, which may be any one of the four types of filtering coefficients

$$S_i^{LumaALF}\ ,\ S_i^{ChromaALF}\ ,\ S_i^{CCALF\ Cb}\ \text{and}$$

$S_i^{CCALF\ Cr}$ , and at most four filtering coefficients exist, that is, all the preceding four types of filtering coefficients exist.

During the ALF operation, the historical candidate sets of the ALF APSs are maintained, which plays a major role in acquiring the historical APSs. When it is determined that the new APS is used, the historical candidate set of the ALF APS is updated according to the first in, first out rule. The acquisition of the historical APSs in the ALF needs to rely on the historical candidate sets of the ALF APSs, and the number of historical sets of the current filtering unit may be calculated through the historical candidate sets. When the historical candidate set is acquired, whether the APS in the historical candidate set can be used by the current filtering unit needs to be determined. The decision conditions are described below. 1) The temporal layer for transmitting the APS is lower than or equal to the temporal layer of the current filtering unit. 2) A filter set corresponding to the ALF mode exists in the APS. Only the APS that satisfies the preceding two conditions is selected as the historical APS of the current filtering unit.

In addition to the rule restrictions for acquiring the historical APSs, the historical candidate sets are different under different encoding configurations.

Under the All Intra (AI) configuration, all frames are in the AI mode, so the historical APSs cannot be used, and no historical candidate set is formed. Under the Random Access (RA) configuration, the historical candidate sets of the ALF APSs are cleared every I frame, limiting the effect of the historical APSs. Under the Low Delay (LD) configuration, since in the official configuration of LD, all filtering units belong to the same temporal layer, the B/P frames are not restricted by the temporal layer during the acquisition of the historical set. In addition, no historical candidate set clearing mechanism exists under LD. The transmitted APS always exists in the historical candidate set of the ALF APS unless the transmitted APS is replaced by a new APS with the same identity (ID) number.

The ALF decision refers to determining the ALF filtering coefficients among the ALF decision candidates. FIG. 5 is a schematic diagram of ALF decision candidates according to an embodiment. As shown in FIG. 5, the ALF decision candidates include the four options below.

First, when alf_enable_flag = 0, ALF is skipped.

When alf_enable_flag = 1, three options exist.

Second, for the new APS (New ALF APS), the index of the new APS and the filtering coefficient of the new APS need to be transmitted.

Third, for offline-trained filter sets, only the indices of the offline-trained filter sets are transmitted. Only the luma ALF has the offline-trained filter sets. The offline-trained filter sets are trained offline. When it is determined that the offline-trained filter sets are used, the indices of the offline-trained filter sets need to be determined.

Fourth, for the historical APSs, only the indices of the historical APSs are transmitted. The historical APSs are calculated online based on the previous frames.

During the ALF decision process, the rate-distortion criterion is used for determination. The decision factor is introduced into the determination process. The decision factor needs to be calculated before the current filtering unit is encoded, and the calculation requires parameters in the configuration such as a quantization parameter (QP). The fixed function settings for luma and chroma are slightly different due to the different component characteristics, so the decision factors for different ALF filtering modes are different.

The current design of decision factors is suboptimal, resulting in the following: a large number of luma ALF APSs are explicitly transmitted while the chroma ALF APSs are absent. As a result, the fullness of the historical candidate sets of the ALF APSs is relatively low.

The filtering parameter processing method provided in this embodiment includes: determining a new APS of a current filtering mode of a target filtering unit; after determining that the current filtering mode satisfies a decision factor correction condition, determining a corrected decision factor, where the corrected decision factor is less than a decision factor before correction; and determining, according to the corrected decision factor, whether to use the new APS of the current filtering mode. After the current filtering mode satisfies the decision factor correction condition, the corrected decision factor is determined, and whether to use the new APS of the current filtering mode is determined according to the corrected decision factor. Since the corrected decision factor is less than the decision factor before correction, when whether to use the new APS of the current filtering mode is determined according to the corrected decision factor, there is a greater possibility of determining to use the new APS of the current filtering mode, thereby increasing the number of historical candidate sets and enhancing the use effect of ALF.

A filtering parameter processing method, a device, a storage medium, and the technical effects thereof are described below.

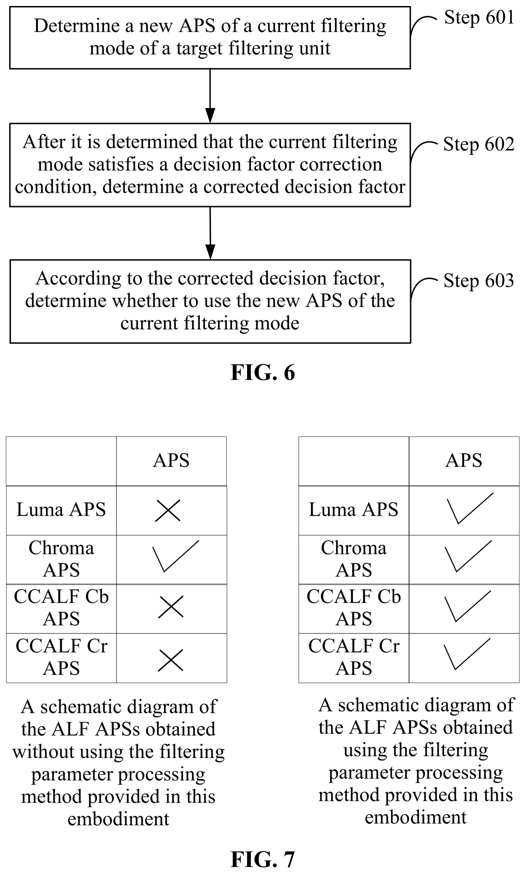

FIG. 6 is a flowchart of a filtering parameter processing method according to an embodiment. The filtering parameter processing method provided in this embodiment may be applied to the scenario of video coding and, in particular, to the scenario of processing the ALF filtering parameters in video coding. The filtering parameter processing method provided in this embodiment may be applied to a filtering parameter processing apparatus. The filtering parameter processing apparatus may be implemented by software and/or hardware. The filtering parameter processing apparatus may be disposed in an electronic device, for example, a computer device. As shown in FIG. 6, the filtering parameter processing method provided in this embodiment includes the steps below.

In step 601, a new APS of a current filtering mode of a target filtering unit is determined.

In this embodiment, the target filtering unit refers to the filtering unit currently being encoded. The current filtering mode refers to the filtering mode currently being applied.

In an embodiment, the target filtering unit includes at least one of the following: a slice, a tile, a CTU, or a sub-picture.

In an embodiment, the current filtering mode includes at least one of the following: luma ALF, chroma ALF, CCALF Cb, or CCALF Cr.

Based on the original frame and the reconstructed frame, the idea of the Wiener filter is adopted, the MSE between the original frame and the reconstructed frame is the optimization goal, the Wiener-Hopf equation related to the original frame and the reconstructed frame is listed, and the new APSs related to the filtering modes are the ALF filtering coefficients obtained according to the solved results of the equation.

When the current filtering mode is luma ALF, the new APS of luma ALF is determined according to the reconstructed luma pixel value and the original luma pixel value of the target filtering unit.

When the current filtering mode is chroma ALF, the new APS of chroma ALF is determined according to the reconstructed chroma pixel value and the original chroma pixel value of the target filtering unit.

When the current filtering mode is CCALF Cb, the new APS of CCALF Cb is determined according to the reconstructed luma pixel value and the original Cb pixel value of the target filtering unit.

When the current filtering mode is CCALF Cr, the new APS of CCALF Cr is determined according to the reconstructed luma pixel value and the original Cr pixel value of the target filtering unit.

In step 602, after it is determined that the current filtering mode satisfies a decision factor correction condition, a corrected decision factor is determined.

The corrected decision factor is less than a decision factor before correction.

In this embodiment, before the ALF decision is performed, after it is determined that the current filtering mode satisfies the decision factor correction condition, the corrected decision factor is determined. In addition, the corrected decision factor is less than the decision factor before correction.

In an embodiment, before step 602, the following step is further included: determining whether the current filtering mode satisfies the decision factor correction condition.

In an embodiment, that whether the current filtering mode satisfies the decision factor correction condition is determined includes at least one of the following: the number of available historical candidate sets for the current filtering mode is less than a preset threshold; or using a new APS of a preceding filtering mode.

In this embodiment, the number of available historical candidate sets for the current filtering mode refers to the number of historical filtering parameters that are not empty in the historical candidate sets of the current filtering mode.

The number of available historical candidate sets for each of different filtering modes is less than the preset threshold, which is shown below.

$N_{luma\ ALF} <= T_{luma\ ALF}$, where $N_{luma\ ALF}$ denotes the number of available historical candidate sets for luma ALF, and $T_{luma\ ALF}$ denotes the preset threshold corresponding to luma ALF.

$N_{Chroma\ ALF} <= T_{Chroma\ ALF}$, where $N_{Chroma\ ALF}$ denotes the number of available historical candidate sets for chroma ALF, and $T_{Chroma\ ALF}$ denotes the preset threshold corresponding to chroma ALF.

$N_{CCALF\ Cb} <= T_{CCALF\ Cb}$, where $N_{CCALF\ Cb}$ denotes the number of available historical candidate sets for CCALF Cb, and $T_{CCALF\ Cb}$ denotes the preset threshold corresponding to CCALF Cb.

$N_{CCALF\ Cr} <= T_{CCALF\ Cr}$, where $N_{CCALF\ Cr}$ denotes the number of available historical candidate sets for CCALF Cr, and $T_{CCALF\ Cr}$ denotes the preset threshold corresponding to CCALF Cr.

In an implementation, the preset thresholds corresponding to different filtering modes are the same.

In another implementation, different filtering modes correspond to different preset thresholds to adapt to more application scenarios.

In another implementation, the preset thresholds corresponding to different filtering modes are partially the same and partially different.

The preceding filtering mode refers to a filtering mode for which the ALF decision has already been made prior to the ALF decision for the current filtering mode. It is to be understood that the preceding filtering mode includes at least one of the following: luma ALF, chroma ALF, CCALF Cb, or CCALF Cr.

In an implementation, when the number of available historical candidate sets for the current filtering mode is less than the preset threshold, it is determined that the current filtering mode satisfies the decision factor correction condition.

In this implementation, when it is determined that the number of available historical candidate sets for the current filtering mode is relatively small, the decision factor is corrected to preferentially recommend the use of a new APS for the current filtering mode.

In another implementation, when the new APS for the preceding filtering mode is used, it is determined that the current filtering mode satisfies the decision factor correction condition.

In this implementation, it is desired to correct the decision factor to preferentially recommend the use of the new APS for the current filtering mode in the case where it has been determined that the new APS for the preceding filtering mode is to be used.

In another implementation, when the number of available historical candidate sets for the current filtering mode is less than the preset threshold and the new APS for the preceding filtering mode is used, it is determined that the current filtering mode satisfies the decision factor correction condition.

In an embodiment, that the corrected decision factor is determined includes: determining the product of a preset weight and the decision factor before correction as the corrected decision factor. The preset weight is a number less than 1 and greater than zero.

For example, the decision factor in this embodiment may include a Lagrangian factor. The corrected Lagrangian factors for different filtering modes are expressed below.

$$l_{luma\ ALF}^{luma} = k_{luma\ ALF}\, l_{VVC}^{luma}$$

, where $k_{luma\ ALF}$ denotes the preset weight corresponding to luma ALF, $l_{VVC}^{luma}$ denotes the luma ALF Lagrangian factor before correction, and $l_{luma\ ALF}^{luma}$ denotes the luma Lagrangian factor after correction.

$$l_{Chroma\ ALF}^{Chroma} = k_{Chroma\ ALF}\, l_{VVC}^{Chroma}$$, where $k_{Chroma\ ALF}$ denotes the preset weight corresponding to chroma ALF, $l_{VVC}^{Chroma}$ denotes the chroma ALF Lagrangian factor before correction, and $l_{Chroma\ ALF}^{Chroma}$ denotes the chroma Lagrangian factor after correction.

$$l_{CCALF\ Cb}^{Cb} = k_{CCALF\ Cb}\, l_{VVC}^{Cb}$$, where $k_{CCALF\,Cb}$ denotes the preset weight corresponding to CCALF Cb, $l_{VVC}^{Cb}$ denotes the CCALF Cb Lagrangian factor before correction, and $l_{CCALF\ Cb}^{Cb}$ denotes the CCALF Cb Lagrangian factor after correction.

$$l_{CCALF\ Cr}^{Cr} = k_{CCALF\ Cr}\, l_{VVC}^{Cr}$$, where $k_{CCALF\ Cr}$ denotes the preset weight corresponding to CCALF Cr, $l_{VVC}^{Cr}$ denotes the CCALF Cr Lagrangian factor before correction, and $l_{CCALF\ Cr}^{Cr}$ denotes the CCALF Cr Lagrangian factor after correction.

In an implementation, the preset weights corresponding to different filtering modes are the same.

In another implementation, different filtering modes correspond to different preset weights to adapt to more application scenarios.

In another implementation, the preset weights corresponding to different filtering modes are partially the same and partially different.

In another embodiment, that the corrected decision factor is determined includes: subtracting a preset value from the decision factor before correction to obtain a difference and determining the difference as the corrected decision factor. The preset value is a number greater than 0.

To sum up, any technical means that achieves that the corrected decision factor is less than the decision factor before correction falls within the scope of this embodiment.

In step 603, according to the corrected decision factor, whether to use the new APS of the current filtering mode is determined.

Before step 603 is further described, the rate-distortion criterion is first introduced.

Mainstream video compression is predominantly lossy compression. Therefore, as a tool for measuring compression performance, the rate-distortion criterion is the most widely used technology at the video compression encoding end, with nearly all modules relying on it to determine the final mode. The rate-distortion criterion is based on the principle of rate-distortion optimization. Under the constraint of the coding bit rate, the optimization problem is established by minimizing the distortion as shown in the following formula:

$$\min_{X} D(X),\ s.t.R(X) £ R_c.$$

D denotes the distortion. Since the time domain transform and the frequency domain transform are no longer performed in the loop filtering link, the distortion D is uniformly measured by the minimum MSE, R denotes the bit rate, and X may denote the partition structure, the prediction mode, the transformation coefficient, or the like. In the ALF module, during decision-making at the filtering unit level, X is determined in the range of ALF decision candidate identifiers shown in FIG. 5, including skipping ALF, using the new APS, the offline-trained filter sets, and historical APSs.

The constrained problem in the preceding formula may be converted into an unconstrained problem by introducing a decision factor, for example, the Lagrangian factor $\lambda$ as shown in the following formula:

$$\min_{X} J = D(X) + l\ R(X).$$

J denotes the rate-distortion cost. The rate-distortion cost accurately describes the combined impact of the number of bits required for the current mode and the distortion resulting from applying the mode. The rate-distortion costs of two filtering coefficients are compared to determine the pros and cons of the two filtering coefficients. A smaller mode cost indicates better compression performance.

Generally, the value of the decision factor in video coding has a fixed functional relationship with the QP of the target filtering unit. The decision factor needs to be calculated before the current filtering unit is encoded. The calculation requires parameters such as the QP from the configuration. The fixed function settings for luma and chroma are slightly different due to the different component characteristics, so the decision factors of different components are different.

In step 603, whether to use the new APS of the current filtering mode is determined based on the corrected decision factor, for example, the corrected Lagrangian factor. As shown in the formula

$$\min_{X} J = D(X) + l\ R(X),$$

when the Lagrangian factor $\lambda$ decreases, R may increase, indicating that the bit rate may increase. Therefore, there is a greater possibility of determining to use the new APS of the current filtering mode.

Using the new APS of the current filtering mode means that the new APS may be added to the historical candidate sets of the current filtering mode, thereby increasing the number of historical filtering parameters that are not empty in the historical candidate sets of the current filtering mode and improving the fullness of the historical candidate sets of the current filtering mode. The increase in the fullness of the historical candidate sets of the current filtering mode means that there are more selection possibilities during ALF decision-making, thereby enhancing the use effect of ALF.

FIG. 7 is a schematic diagram of ALF APSs according to an embodiment. The "√" indicates the use of the new APS, and the "x" indicates the non-use of the new APS. As shown in FIG. 7, the left figure is a schematic diagram of the ALF APSs obtained without using the filtering parameter processing method provided in this embodiment. In the left figure, only the chroma ALF APS uses the new APS, and the new APS is not used in the other three filtering modes. The right figure is a schematic diagram of the ALF APSs obtained using the filtering parameter processing method provided in this embodiment. It can be seen that the new APS is used in each of the four ALF filtering modes. This means that, compared with the left figure, the ALF APSs obtained in the right figure have three new APSs added. The three new APSs can be subsequently added to the historical filtering parameters corresponding to the filtering modes, thereby improving the fullness of the historical candidate sets.

In an embodiment, after it is determined that the current filtering mode does not satisfy the decision factor correction condition, whether to use the new APS of the current filtering mode is determined according to the decision factor before correction. The decision factor before correction in this embodiment refers to the decision factor obtained according to parameters such as the QP in the configuration.

In an embodiment, the filtering parameter processing method provided in this embodiment further includes the following step: after determining, according to the corrected decision factor, that the new APS of the current filtering mode needs to be used, transmitting the new APS of the current filtering mode in a bitstream.

In an embodiment, after it is determined, according to the corrected decision factor, that the new APS of the current filtering mode needs to be used, target historical filtering parameters corresponding to the target filtering unit among historical filtering parameters of the current filtering mode are updated to the new APS of the current filtering mode.

The filtering parameter processing method provided in this embodiment includes: determining a new APS of a current filtering mode of a target filtering unit; after determining that the current filtering mode satisfies a decision factor correction condition, determining a corrected decision factor, where the corrected decision factor is less than a decision factor before correction; and determining, according to the corrected decision factor, whether to use the new APS of the current filtering mode. After the current filtering mode satisfies the decision factor correction condition, the corrected decision factor is determined, and whether to use the new APS of the current filtering mode is determined according to the corrected decision factor. Since the corrected decision factor is less than the decision factor before correction, when whether to use the new APS of the current filtering mode is determined according to the corrected decision factor, there is a greater possibility of determining to use the new APS of the current filtering mode, thereby increasing the fullness of historical candidate sets and enhancing the use effect of ALF.

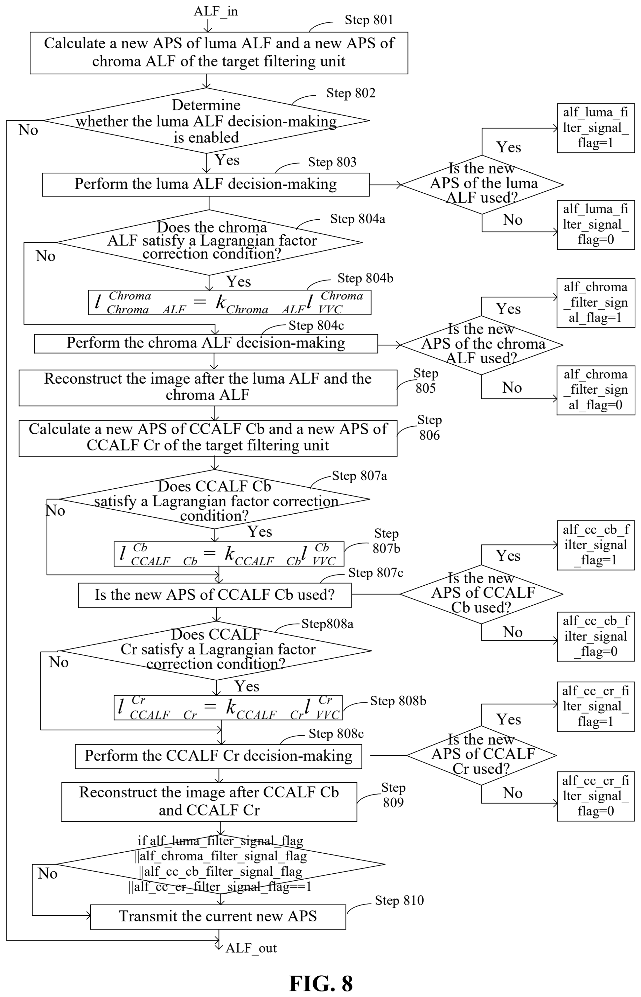

FIG. 8 is a flowchart of another filtering parameter processing method according to an embodiment. This embodiment describes a complete ALF filtering process based on the embodiment shown in FIG. 6. In this implementation, the case where the luma ALF is the preceding filtering mode is used as an example for description. It is to be understood that the implementation processes and technical principles when other filtering modes are the preceding filtering modes are similar to the implementation process and technical principle when the luma ALF is the preceding filtering mode. In this embodiment, the case where the decision factor includes a Lagrangian factor is used as an example for description. As shown in FIG. 8, the filtering parameter processing method provided in this embodiment includes the steps below.

In step 801, a new APS of luma ALF and a new APS of chroma ALF of the target filtering unit are calculated.

For the target filtering unit, the new APS $S_i^{LumaALF}$ of luma ALF and the new APS $S_i^{ChromaALF}$ of chroma ALF are calculated according to the principle of Wiener filtering.

In step 802, whether the luma ALF decision-making is enabled is determined.

If the luma ALF decision-making is not enabled, the ALF filtering is not performed.

In step 803, if the lumaALF decision-making is enabled, the luma ALF decision-making is performed.

Rate-distortion optimization (RDO) decisions are made on skipping ALF, the new APS of luma ALF, offline-trained filter sets, and historical APSs of luma ALF. If the decision result is to use the new APS of luma ALF, alf_luma_filter_signal_flag needs to be set to the first preset value, otherwise alf_luma_filter_signal_flag is set to the second preset value. In this embodiment, the case where the first preset value is 1 and the second preset value is 0 is used as an example for description.

It is to be understood that before step 803, the following steps may be performed: after determining that the luma ALF satisfies a Lagrangian factor correction condition, determining a corrected Lagrangian factor, where the corrected Lagrangian factor is less than the Lagrangian factor before correction. Then, in step 803, when the luma ALF decision-making is performed, whether to use the new APS of the luma ALF is determined according to the corrected Lagrangian factor.

In step 804, if the luma ALF decision-making is enabled, the chroma ALF decision-making is performed.

In step 804a, whether chroma ALF satisfies the Lagrangian factor correction condition is determined.

In step 804b, if the Lagrangian factor correction condition of the chroma ALF is satisfied, it is assumed here that $N_{Chroma\ ALF} <= T_{Chroma\ ALF}$ and alf_luma_filter_signal_flag is 1. $k_{Chroma\ ALF}$ is used to adjust $\lambda$ of the chroma ALF, otherwise $\lambda$ of the chroma ALF remains unchanged.

$$l_{Chroma\ ALF}^{Chroma} = k_{Chroma\ ALF} l_{VVC}^{Chroma}.$$

In step 804c, the chroma ALF decision-making is performed.

If the Lagrangian factor of the chroma ALF is corrected, the corrected Lagrangian factor of the chroma ALF is used to make a decision; and if the Lagrangian factor of the chroma ALF is not corrected, the Lagrangian factor of the chroma ALF before correction is used to make a decision.

RDO decisions are made on skipping ALF, the new APS of chroma ALF, and historical APSs of chroma ALF. If the decision result uses the new APS of the chroma ALF, alf_chroma_filter_signal_flag needs to be set to 1, otherwise alf_chroma_filter_signal_flag is set to 0.

In step 805, the image after the luma ALF and the chroma ALF is reconstructed according to the decision results of the luma ALF and the chroma ALF.

In this embodiment, reconstructing the image after the luma ALF and the chroma ALF is to filter the input target filtering unit according to the filtering parameters corresponding to the decision results.

In step 806, a new APS of CCALF Cb and a new APS of CCALF Cr of the target filtering unit are calculated.

For the target filtering unit, the new APS $S_i^{CCALF\ Cb}$ of CCALF Cb and the new APS $S_i^{CCALF\ Cr}$ of CCALF Cr are calculated according to the principle of Wiener filtering.

In step 807, if the luma ALF decision-making is enabled, the CCALF Cb decision-making is performed.

In step 807a, whether CCALF Cb satisfies the Lagrangian factor correction condition is determined.

In step 807b, if the Lagrangian factor correction condition of CCALF Cb is satisfied, it is assumed here that $N_{CCALF\ Cb} <= T_{CCALF\ Cb}$ and alf_luma_filter_signal_flag is 1. $k_{CCALF\ Cb}$ is used to adjust $\lambda$ of the Cb component in CCALF Cb, otherwise $\lambda$ remains unchanged. $l_{CCALF\ Cb}^{Cb} = k_{CCALF\ Cb} l_{VVC}^{Cb}$.

In step 807c, the CCALF Cb decision-making is performed.

If the Lagrangian factor of CCALF Cb is corrected, the corrected Lagrangian factor of CCALF Cb is used to make a decision; and if the Lagrangian factor of CCALF Cb is not corrected, the Lagrangian factor of CCALF Cb before correction is used to make a decision.

RDO decisions are made on skipping ALF, the new APS of CCALF Cb, and historical APSs of CCALF Cb If the decision result uses the new APS of CCALF Cb, alf_cc_cb_filter_signal_flag needs to be set to 1, otherwise alf_cc_cb_filter_signal_flag is set to 0.

In step 808, if the luma ALF decision-making is enabled, the CCALF Cr decision-making is performed.

In step 808a, whether CCALF Cr satisfies the Lagrangian factor correction condition is determined.

In step 808b, if the Lagrangian factor correction condition of CCALF Cr is satisfied, it is assumed here that $N_{CCALF\,Cr} <= T_{CCALF\,Cr}$ and alf_luma_filter_signal_flag is 1. $k_{CCALF\,Cr}$ is used to adjust λ of the Cr component in CCALF Cr, otherwise λ remains unchanged.

$$l_{CCALF\ Cr}^{Cr} = k_{CCALF\ Cr}\, l_{VVC}^{Cr}.$$

In step 808c, the CCALF Cr decision-making is performed.

If the Lagrangian factor of CCALF Cr is corrected, the corrected Lagrangian factor of CCALF Cr is used to make a decision; and if the Lagrangian factor of CCALF Cr is not corrected, the Lagrangian factor of CCALF Cr before correction is used to make a decision.

RDO decisions are made on skipping ALF, the new APS of CCALF Cr, and historical APSs of CCALF Cr If the decision result uses the new APS of CCALF Cr, alf_cc_cr_filter_signal_flag needs to be set to 1, otherwise alf_ce_cr_filter_signal_flag is set to 0.

In step 809, the image after CCALF Cb and CCALF Cr is reconstructed according to the decision results of CCALF Cb and CCALF Cr.

It is to be noted that, in step 809, when the image after CCALF Cb and CCALF Cr is reconstructed, the reconstructed image after the luma ALF and the chroma ALF outputted in step 805 is also used.

The process of reconstructing the image in this embodiment is a filtering process using the filtering coefficients determined through decision-making.

In step 810, the current new APS is transmitted.

If one of alf_luma_filter_signal_flag, alf_chroma_filter_signal_flag, alf_cc_cb_filter_signal_flag, or alf_ce_cr_filter_signal_flag is 1, the current APS is transmitted to the bitstream; and if alf_luma_filter_signal_flag, alf_chroma_filter_signal_flag, alf_cc_cb_filter_signal_flag, and alf_ce_cr_filter_signal_flag are all 0, the target filtering unit does not need to transmit the APS.

In the historical candidate sets, if APSs with the same indices already exist, the new APS is directly used to replace the old APS.

It is to be noted that, in step 807b, the Lagrangian factor correction condition of CCALF Cb may be that $N_{CCALF\ Cb} <= T_{CCALF\ Cb}$ and alf_chroma_filter_signal_flag is 1. That is, the chroma ALF is used as the preceding filtering mode of CCALF Cb.

Similarly, in step 808b, the Lagrangian factor correction condition of CCALF Cr may be that $N_{CCALF\,Cr} <= T_{CCALF\,Cr}$ and alf_chroma_filter_signal_flag is 1. That is, the chroma ALF is used as the preceding filtering mode of CCALF Cr. Alternatively, the Lagrangian factor correction condition of CCALF Cr may be that $N_{CCALF\,Cr} <= T_{CCALF\,Cr}$ and alf_cc_cb_filter_signal_flag is 1. That is, CCALF Cb is used as the preceding filtering mode of CCALF Cr.

Of course, in FIG. 8, the ALF filtering process is performed in the following filtering order: luma ALF, chroma ALF, CCALF Cb, and CCALF Cr. It is to be understood that the ALF filtering process may also be performed in other filtering orders. For example, the filtering order may be chroma ALF, luma ALF, CCALF Cb, and CCALF Cr; or the filtering order may be chroma ALF, luma ALF, CCALF Cr, and CCALF Cb. The implementation principle and technical means are similar to those of the above, and the details are not repeated here.

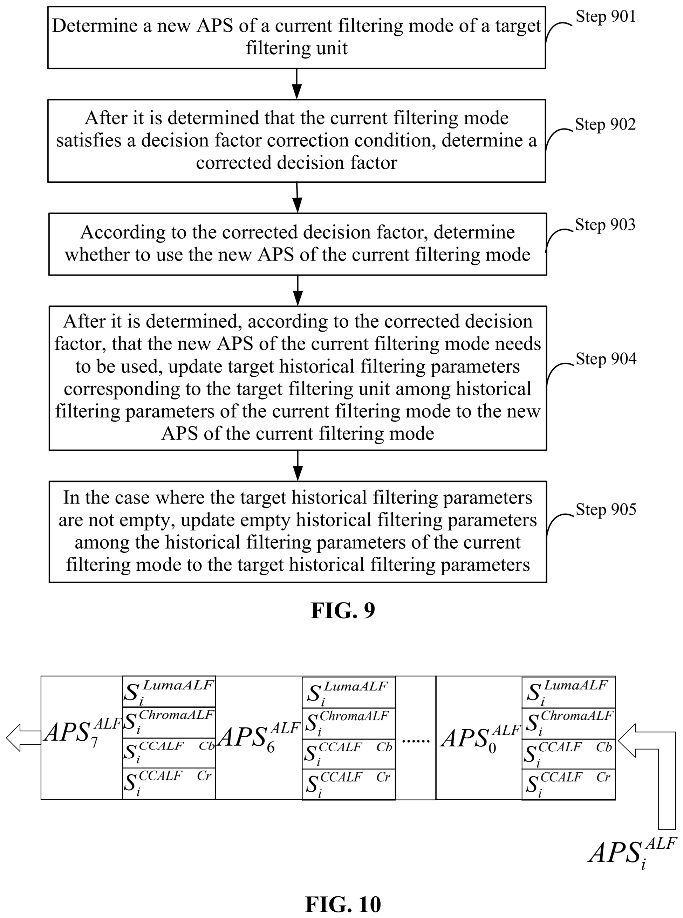

FIG. 9 is a flowchart of another filtering parameter processing method according to an embodiment. Based on the embodiments shown in FIGS. 6 and 8, this embodiment provides a detailed description of the steps after determining that the new APS of the current filtering mode is used.

Before the steps of another filtering parameter processing method shown in FIG. 9 are described in detail, the historical candidate sets of the ALF APSs are first introduced. FIG. 10 is a schematic diagram of historical candidate sets of the ALF APSs according to an embodiment. As shown in FIG. 10, during the ALF operation, the historical candidate sets of the ALF APSs are maintained, which plays a major role in acquiring the historical APSs. When it is determined that the new APS is used, the historical candidate set of the ALF APS is updated according to the first in, first out rule. The acquisition of historical APSs in ALF needs to rely on the historical candidate sets of the ALF APSs. It is to be noted that the historical APSs may also be referred to as historical filtering parameters.

The historical candidate sets of the ALF APSs are constructed in the same manner at the encoding end and the decoding end. A maximum of N APS sets can be maintained within a bitstream, with IDs (also referred to as indices) ranging from 0 to N-1. Each APS set includes historical APSs of four filtering modes: $S_i^{LumaALF}$, $S_i^{ChromaALF}$, $S_i^{CCALF\ Cb}$, and $S_i^{CCALF\ Cr}$. In FIG. 10, the case where N is 8 is used as an example for description. Whenever a new APS set is used, the old APS set with the same ID number is replaced. The ID number of the new APS set corresponds to the target filtering unit, that is, the ID number of the new APS set may be determined according to the target filtering unit.

The new APSs of the four filtering modes are maintained or transmitted together in the form of APS sets. When the new APSs of the four filtering modes are maintained or transmitted, one ALF APS ID is shared. If for the same target filtering unit, the new APSs of the preceding four filtering modes are all decided to be used, then these new APSs share one ID, and the effectiveness of this APS ID is maximized. Apparently, there is also the possibility that only one type of new APS is transmitted within one ALF APS ID. In this case, one ID corresponds to only one new APS. However, when the historical candidate sets are updated, the update is performed at the granularity of the ID. That is, no matter how many new APSs are included in the APS set where the new APS is located, all the four historical filtering parameters at the corresponding ID in the historical candidate sets are updated to the parameters in the APS set. This will result in that the historical filtering parameters that are not empty before the ID are replaced during the update process, causing the originally non-empty historical filtering parameters to become empty after the update, which may reduce the number of APSs of certain ALF modes in the historical candidate sets. If the preceding case occurs too often, the available historical candidate sets in the ALF decision process are reduced, and the role of ALF cannot be fully played.

The embodiment shown in FIG. 9 can solve the problem of a decrease in the number of available historical candidate sets caused by the historical candidate set update process described above. As shown in FIG. 9, the filtering parameter processing method provided in this embodiment includes the steps below.

In step 901, a new APS of a current filtering mode of a target filtering unit is determined.

In step 902, after it is determined that the current filtering mode satisfies a decision factor correction condition, a corrected decision factor is determined.

The corrected decision factor is less than a decision factor before correction.

In step 903, according to the corrected decision factor, whether to use the new APS of the current filtering mode is determined.

Step 901 and step 601, step 902 and step 602, and step 903 and step 603 have similar implementation processes and technical principles, and the details are not repeated here.

In step 904, after it is determined, according to the corrected decision factor, that the new APS of the current filtering mode needs to be used, target historical filtering parameters corresponding to the target filtering unit among historical filtering parameters of the current filtering mode are updated to the new APS of the current filtering mode.

In this embodiment, the target historical filtering parameters corresponding to the current filtering mode may be determined according to the target filtering unit. For example, according to the ID of the new APS corresponding to the target filtering unit, the historical filtering parameters at the same ID in the historical candidate sets of the current filtering mode may be determined as the target historical filtering parameters.

After the target historical filtering parameters are determined, the target historical filtering parameters are updated to the new APS of the current filtering mode.

It is to be understood that the target history filtering parameters may be empty or may not be empty.

In the case where the target historical filtering parameters are empty, the new APS of the current filtering mode may be directly written into the position of the target historical filtering parameters in the historical candidate sets.

In the case where the target historical filtering parameters are not empty, in addition to updating the target historical filtering parameters to the new APS, in this embodiment, the following step 905 may be performed.

In step 905, in the case where the target historical filtering parameters are not empty, empty historical filtering parameters among the historical filtering parameters of the current filtering mode are updated to the target historical filtering parameters.

It is to be understood that the target historical filtering parameters in step 905 refer to the target historical filtering parameters before the update in step 904.

In an embodiment, the empty historical filtering parameters among the historical filtering parameters of the current filtering mode are determined according to a preset rule; and the empty historical filtering parameters among the historical filtering parameters are updated to the target historical filtering parameters.

In an embodiment, the preset rule includes at least one of the following: traversing the historical filtering parameters of the current filtering mode in order of generation time from new to old; or traversing the historical filtering parameters of the current filtering mode in order of generation time from old to new.

It is to be noted that this embodiment does not limit the execution order of step 904 and step 905. That is, step 904 and step 905 may be performed in parallel or in any order.

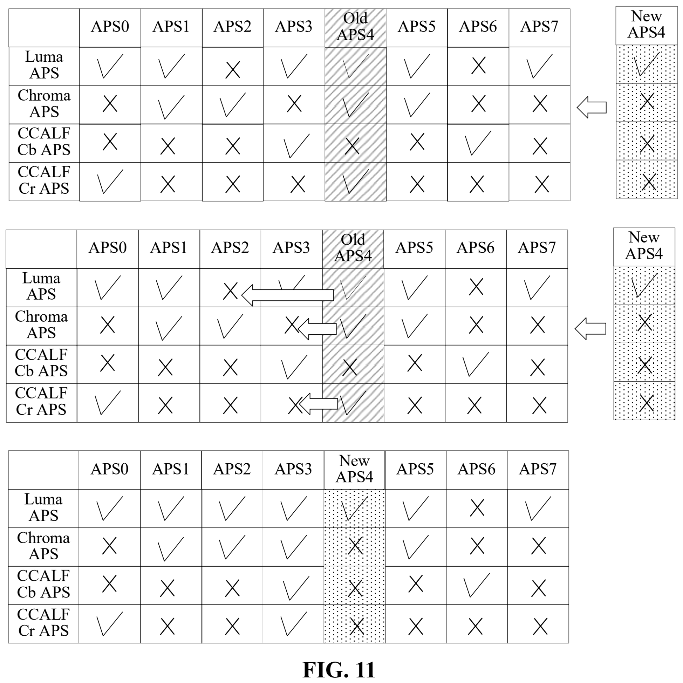

FIG. 11 is a schematic diagram illustrating the updating of historical candidate sets according to an embodiment. The "√" indicates the use of the new APS, and the "x" indicates the non-use of the new APS. As shown in FIG. 11, it is assumed that the ID of the newly inserted APS is 4. The newly inserted APS needs to replace the APS with an ID of 4 in the historical candidate sets. In the filtering parameter processing method provided in this embodiment, the historical filtering parameters at the old APS 4 may be inserted into the historical filtering parameters that are empty in the corresponding filtering modes, thereby replacing the empty historical filtering parameters with non-empty historical filtering parameters and avoid reducing the number of historical candidate sets. It can be seen that the value of the luma APS in the old APS 4 is written into the luma APS in APS 2. The value of the chroma APS in the old APS 4 is written into the chroma APS in APS 3. The value of CCALF Cr in the old APS 4 is written into the CCALF Cr APS in APS 3. Moreover, the value of the new APS 4 is written into the old APS 4. It can be seen that the number of available historical candidate sets in the updated historical candidate sets does not decrease.

In the filtering parameter processing method provided in this embodiment, after it is determined, according to the corrected decision factor, that the new APS of the current filtering mode needs to be used, target historical filtering parameters corresponding to the target filtering unit among historical filtering parameters of the current filtering mode are updated to the new APS of the current filtering mode; and in the case where the target historical filtering parameters are not empty, empty historical filtering parameters among the historical filtering parameters of the current filtering mode are updated to the target historical filtering parameters. By replacing the empty historical filtering parameters with the non-empty target historical filtering parameters, the problem of reducing the number of available historical candidate sets during the update process of the historical candidate sets is avoided, and the fullness of the historical candidate sets is increased, thereby improving the ALF performance.

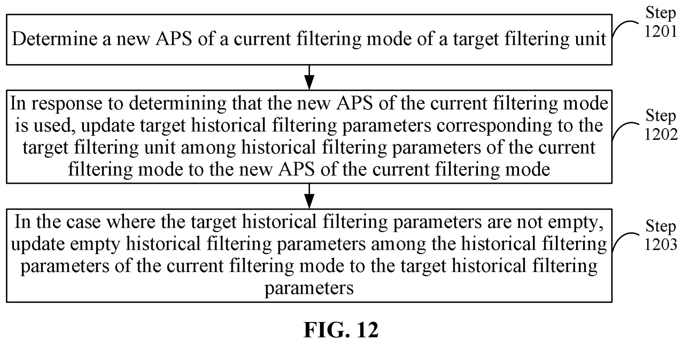

FIG. 12 is a flowchart of a filtering parameter processing method according to an embodiment. The filtering parameter processing method provided in this embodiment may be applied at the encoding end. The filtering parameter processing method provided in this embodiment is mainly used for solving the problem that the number of available historical candidate sets decreases during the update process of the historical candidate sets. The filtering parameter processing method provided in this embodiment may be applied to the scenario of video coding and, in particular, to the scenario of processing the ALF filtering parameters in video coding. The filtering parameter processing method provided in this embodiment may be applied to a filtering parameter processing apparatus. The filtering parameter processing apparatus may be implemented by software and/or hardware. The filtering parameter processing apparatus may be disposed in an electronic device, for example, a computer device. As shown in FIG. 12, the filtering parameter processing method provided in this embodiment includes the steps below.

In step 1201, a new APS of a current filtering mode of a target filtering unit is determined.

Step 1201 and step 601 have similar implementation processes and technical principles, and the details are not repeated here.

In step 1202, in response to determining that the new APS of the current filtering mode is used, target historical filtering parameters corresponding to the target filtering unit among historical filtering parameters of the current filtering mode are updated to the new APS of the current filtering mode.

The difference between this embodiment and the embodiment shown in FIG. 9 is that the manner in the embodiment shown in FIG. 9 may be adopted in this embodiment, that is, whether the decision factor of the current filtering mode needs to be corrected is determined, and when it is determined that the decision factor of the current filtering mode needs to be corrected, whether to use the new APS of the current filtering mode is determined according to the corrected decision factor. It is also feasible to directly use the decision factor obtained according to parameters such as the QP in the configuration to determine whether to use the new APS of the current filtering mode.

In an embodiment, the filtering parameter processing method provided in this embodiment further includes the following steps: when determining that the current filtering mode satisfies the decision factor correction condition, determining the corrected decision factor, where the corrected decision factor is less than the decision factor before correction; and determining, according to the corrected decision factor, whether to use the new APS of the current filtering mode. The implementation process and technical principle of this embodiment are similar to the implementation process and technical principle in the embodiment shown in FIG. 9, and the details are not repeated here. For example, the decision factor in this embodiment may include a Lagrangian factor.

In step 1202, the target historical filtering parameters corresponding to the current filtering mode may be determined according to the target filtering unit. For example, according to the ID of the new APS corresponding to the target filtering unit, the historical filtering parameters at the same ID in the historical candidate sets of the current filtering mode may be determined as the target historical filtering parameters.

After the target historical filtering parameters are determined, the target historical filtering parameters are updated to the new APS of the current filtering mode.

It is to be understood that the target history filtering parameters may be empty or may not be empty.

In the case where the target historical filtering parameters are empty, the new APS of the current filtering mode may be directly written into the position of the target historical filtering parameters in the historical candidate sets.

In the case where the target historical filtering parameters are not empty, in addition to updating the target historical filtering parameters as the new APS, in this embodiment, the following step 1203 may be performed.

In step 1203, in the case where the target historical filtering parameters are not empty, empty historical filtering parameters among the historical filtering parameters of the current filtering mode are updated to the target historical filtering parameters.

In an embodiment, step 1203 may include: determining the empty historical filtering parameters among the historical filtering parameters of the current filtering mode according to a preset rule; and updating the empty historical filtering parameters among the historical filtering parameters to the target historical filtering parameters.

The preset rule includes at least one of the following: traversing the historical filtering parameters of the current filtering mode in order of generation time from new to old; or traversing the historical filtering parameters of the current filtering mode in order of generation time from old to new. It is to be noted that multiple preset rules may be used. For example, in some filtering modes, the historical filtering parameters of the current filtering mode are traversed in order of generation time from new to old, while in other filtering modes, the historical filtering parameters of the current filtering mode are traversed in order of generation time from old to new.

In the filtering parameter processing method provided in this embodiment, after it is determined that the new APS of the current filtering mode needs to be used, target historical filtering parameters corresponding to the target filtering unit among historical filtering parameters of the current filtering mode are updated to the new APS of the current filtering mode; and in the case where the target historical filtering parameters are not empty, empty historical filtering parameters among the historical filtering parameters of the current filtering mode are updated to the target historical filtering parameters. By replacing the empty historical filtering parameters with the non-empty target historical filtering parameters, the problem of reducing the number of available historical candidate sets during the update process of the historical candidate sets is avoided, and the fullness of the historical candidate sets is increased, thereby improving the ALF performance.

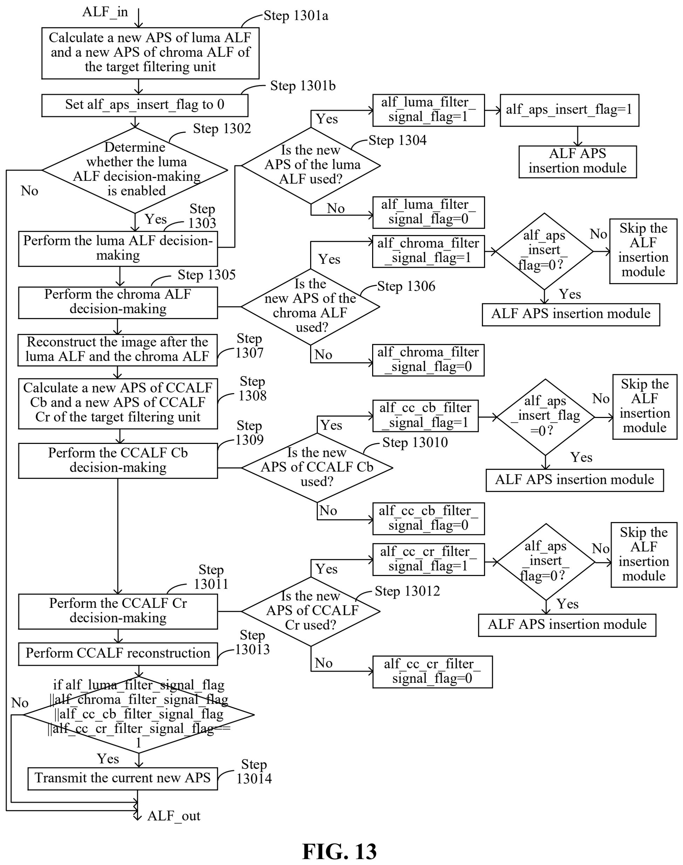

FIG. 13 is a flowchart of another filtering parameter processing method according to an embodiment. This embodiment describes a complete ALF filtering process based on the embodiment shown in FIG. 12. In this embodiment, a flag is set to indicate whether the empty slot in the current ALF APS is filled. For example, the flag is defined as alf_aps_insert_flag. As shown in FIG. 13, the filtering parameter processing method provided in this embodiment includes the steps below.

In step 1301a, a new APS of luma ALF and a new APS of chroma ALF of the target filtering unit are calculated.

In step 1301b, alf_aps_insert_flag is set to 0.

In step 1302, whether the luma ALF decision-making is enabled is determined.

If the luma ALF decision-making is not enabled, the ALF filtering is not performed.

In step 1303, if the luma ALF decision-making is enabled, the luma ALF decision-making is performed.

RDO decisions are made on skipping ALF, the new APS of luma ALF, offline-trained filter sets, and historical APSs of luma ALF. If the decision result is to use the new APS of luma ALF, alf_luma _filter_signal_flag needs to be set to the first preset value, otherwise alf_luma_filter_signal_flag is set to the second preset value. In this embodiment, the case where the first preset value is 1 and the second preset value is 0 is used as an example for description.

In step 1304, if the luma ALF uses a new APS, an ALF APS insertion module is invoked, and alf_aps_insert_flag is set to 1.

In step 1305, if the luma ALF decision-making is enabled, the chroma ALF decision-making is performed.

RDO decisions are made on skipping ALF, the new APS of chroma ALF, and historical APSs of chroma ALF. If the decision result uses the new APS of the chroma ALF, alf_chroma_filter_signal_flag needs to be set to 1, otherwise alf_chroma_filter_signal_flag is set to 0.

In step 1306, if alf_aps_insert_flag is 0 and the chroma ALF uses a new APS, the ALF APS insertion module is invoked, and alf_aps_insert_flag is set to 1.

In step 1307, the image after the luma ALF and the chroma ALF is reconstructed according to the decision results of the luma ALF and the chroma ALF.

In step 1308, a new APS of CCALF Cb and a new APS of CCALF Cr of the target filtering unit are calculated.

In step 1309, if the luma ALF decision-making is enabled, the CCALF Cb decision-making is performed.

RDO decisions are made on skipping ALF, the new APS of CCALF Cb, and historical APSs of CCALF Cb If the decision result uses the new APS of CCALF Cb, alf_cc_cb_filter_signal_flag needs to be set to 1, otherwise alf_cc_cb_filter_signal_flag is set to 0.

In step 13010, if alf_aps_insert_flag is 0 and CCALF Cb uses a new APS, the ALF APS insertion module is invoked, and alf_aps_insert_flag is set to 1.

In step 13011, if the luma ALF decision-making is enabled, the CCALF Cr decision-making is performed.

RDO decisions are made on skipping ALF, the new APS of CCALF Cr, and historical APSs of CCALF Cr If the decision result uses the new APS of CCALF Cr, alf_cc_cr_filter_signal_flag needs to be set to 1, otherwise alf_cc_cr_filter_signal_flag is set to 0.

In step 13012, if alf_aps_insert_flag is 0 and CCALF Cr uses a new APS, the ALF APS insertion module is invoked, and alf_aps_insert_flag is set to 1.

In step 13013, CCALF reconstruction is performed.

The image after CCALF Cb and CCALF Cr is reconstructed according to the decision results of CCALF Cb and CCALF Cr.

In step 13014, the current new APS is transmitted.

If one of alf_luma_filter_signal_flag, alf_chroma_filter_signal_flag, alf_cc_cb_filter_signal_flag, or alf_ce_cr_filter_signal_flag is 1, the current new APS is transmitted to the bitstream; and if alf_luma_filter_signal_flag, alf_chroma_filter_signal_flag, alf_cc_cb_filter_signal_flag, and alf_ce_cr_filter_signal_flag are all 0, the target filtering unit does not need to transmit the APS.

In the historical candidate sets, if APSs with the same indices already exist, the new APS is directly used to replace the old APS.

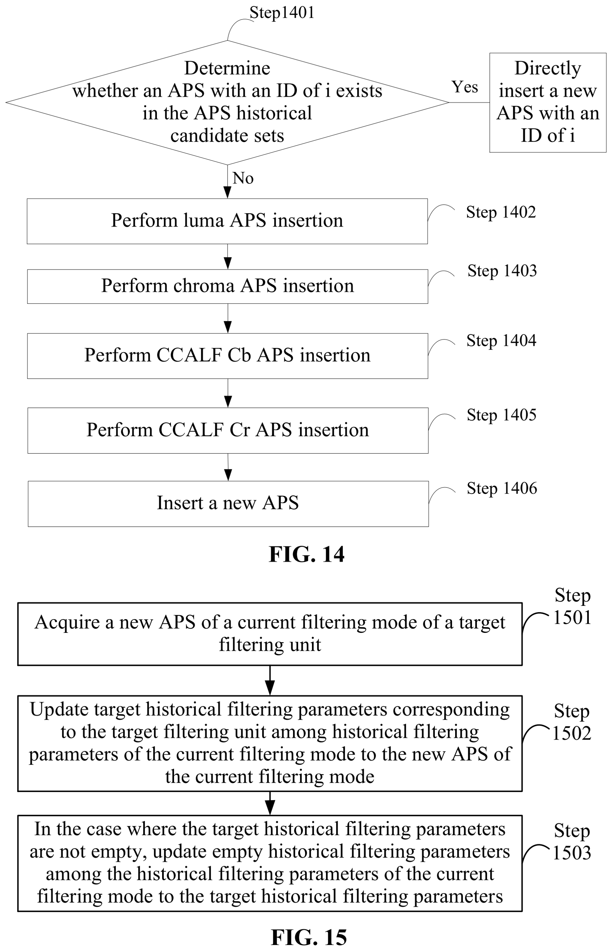

FIG. 14 is a flowchart illustrating gap insertion in a filtering parameter processing method according to an embodiment. It is assumed that the ID of the newly inserted APS is i. As shown in FIG. 14, the execution process of the insertion module in the embodiment shown in FIG. 13 may include the steps below.

In step 1401, whether an APS with an ID of i exists in the APS historical candidate sets is determined.

If the APS with an ID of i does not exist in the original APS historical candidate sets, a new APS with an ID of i is directly inserted, otherwise the following steps are performed.

In step 1402, luma APS insertion is performed.

If no luma APS exists in the APSs with an ID of i in the APS historical candidate sets, step 1403 is directly performed.

If the luma APS exists, the APS historical candidate sets are traversed in the specified order, such as from old to new or from new to old, and whether the luma APS is empty is determined. If the luma APS is empty, the luma APS in the APSs with an ID of i is inserted into the empty position and traversal is stopped. If the luma APS is not empty, traversal is continued.

In step 1403, chroma APS insertion is performed.

If no luma APS exists in the APSs with an ID of i in the APS historical candidate sets, step 1404 is directly performed.

If the chroma APS exists, the APS historical candidate sets are traversed in the specified order, such as from old to new or from new to old, and whether the chroma APS is empty is determined. If the chroma APS is empty, the chroma APS in the APSs with an ID of i is inserted into the empty position and traversal is stopped. If the chroma APS is not empty, traversal is continued.

In step 1404, CCALF Cb APS insertion is performed.

If no CCALF Cb APS exists in the APSs with an ID of i in the APS historical candidate sets, step 1405 is directly performed.

If the CCALF Cb APS exists, the APS historical candidate sets are traversed in the specified order, such as from old to new or from new to old, and whether the CCALF Cb APS is empty is determined. If the CCALF Cb APS is empty, the CCALF Cb APS in the APSs with an ID of i is inserted into the empty position and traversal is stopped. If the CCALF Cb APS is not empty, traversal is continued.

In step 1405, CCALF Cr APS insertion is performed.

If no CCALF Cr APS exists in the APSs with an ID of i in the APS historical candidate sets, step 1406 is directly performed.

If the CCALF Cr APS exists, the APS historical candidate sets are traversed in the specified order, such as from old to new or from new to old, and whether the CCALF Cr APS is empty is determined. If the CCALF Cr APS is empty, the CCALF Cr APS in the APSs with an ID of i is inserted into the empty position and traversal is stopped. If the CCALF Cr APS is not empty, traversal is continued.

It is to be noted that the execution order of steps 1402 to 1405 may be performed in parallel or in any order. This embodiment is not limited thereto.

In step 1406, a new APS is inserted.

The new APS with an ID of i is inserted into the ALF APS historical candidate sets, thereby replacing the old APS with the corresponding ID.

FIG. 15 is a flowchart of another filtering parameter processing method according to an embodiment. The filtering parameter processing method provided in this embodiment may be applied at the decoding end. The filtering parameter processing method provided in this embodiment is mainly used for solving the problem that the number of available historical candidate sets decreases during the update process of the historical candidate sets. The filtering parameter processing method provided in this embodiment may be applied to the scenario of video coding and, in particular, to the scenario of processing the ALF filtering parameters in video coding. The filtering parameter processing method provided in this embodiment may be applied to a filtering parameter processing apparatus. The filtering parameter processing apparatus may be implemented by software and/or hardware. The filtering parameter processing apparatus may be disposed in an electronic device, for example, a computer device. As shown in FIG. 15, the filtering parameter processing method provided in this embodiment includes the steps below.

In step 1501, a new APS of a current filtering mode of a target filtering unit is acquired.

The bitstream of the target filtering unit is parsed. If the bitstream contains alf_data() information, the alf_data() information is parsed to acquire the index of the current ALF APS in alf_data() and the filter coefficients therein, that is, the new APS and other information.

In step 1502, target historical filtering parameters corresponding to the target filtering unit among historical filtering parameters of the current filtering mode are updated to the new APS of the current filtering mode.

Step 1502 and step 1202 in each of which target historical filtering parameters corresponding to the target filtering unit among historical filtering parameters of the current filtering mode are updated to the new APS of the current filtering mode have similar implementation processes and technical principles, and the details are not repeated here.

In step 1503, in the case where the target historical filtering parameters are not empty, empty historical filtering parameters among the historical filtering parameters of the current filtering mode are updated to the target historical filtering parameters.

Step 1503 and step 1203 have similar implementation processes and technical principles, and the details are not repeated here. Step 1503 may be performed by invoking the insertion module. The implementation process of the insertion module is similar to the implementation process of the insertion module in the embodiment shown in FIG. 14.

In an embodiment, the filtering parameter processing method provided in this embodiment may also include at least one of the following steps: luma ALF reconstruction: reconstructing the image after the luma ALF according to the luma ALF information obtained from bitstream parsing; chroma ALF reconstruction: reconstructing the image after the chroma ALF according to the chroma ALF information obtained from bitstream parsing; and CCALF reconstruction: reconstructing the image after CCALF according to the CCALF information obtained from bitstream parsing.

In the filtering parameter processing method provided in this embodiment, after the new APS of the current filtering mode is acquired, target historical filtering parameters corresponding to the target filtering unit among historical filtering parameters of the current filtering mode are updated to the new APS of the current filtering mode; and in the case where the target historical filtering parameters are not empty, empty historical filtering parameters among the historical filtering parameters of the current filtering mode are updated to the target historical filtering parameters. By replacing the empty historical filtering parameters with the non-empty target historical filtering parameters, the problem of reducing the number of available historical candidate sets during the update process of the historical candidate sets is avoided, and the fullness of the historical candidate sets is increased, thereby improving the ALF performance.

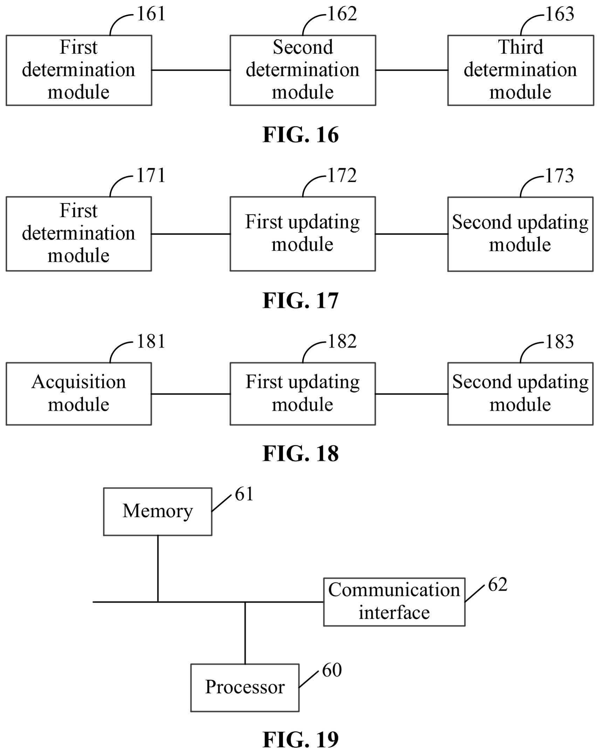

FIG. 16 is a diagram illustrating the structure of a filtering parameter processing apparatus according to an embodiment. As shown in FIG. 16, the filtering parameter processing apparatus may include the following modules: a first determination module 161, a second determination module 162, and a third determination module 163.

The first determination module 161 is configured to determine a new APS of a current filtering mode of a target filtering unit.

The second determination module 162 is configured to, after it is determined that the current filtering mode satisfies a decision factor correction condition, determine a corrected decision factor.

The corrected decision factor is less than a decision factor before correction.

The third determination module 163 is configured to, according to the corrected decision factor, determine whether to use the new APS of the current filtering mode.

In an embodiment, the current filtering mode includes at least one of the following: luma ALF, chroma ALF, CCALF Cb, or CCALF Cr.

In an embodiment, the apparatus further includes a fourth determination module configured to determine whether the current filtering mode satisfies the decision factor correction condition.

In an embodiment, the fourth determination module is configured to perform at least one of the following: the number of available historical candidate sets for the current filtering mode is less than a preset threshold; or using a new APS of a preceding filtering mode.

In an embodiment, the preset thresholds corresponding to different filtering modes are the same, or different filtering modes correspond to different preset thresholds.

In an embodiment, the second determination module 162 is configured to determine the product of a preset weight and the decision factor before correction as the corrected decision factor. The preset weight is a number less than 1 and greater than zero.

In an embodiment, the preset weights corresponding to different filtering modes are the same, or different filtering modes correspond to different preset weights.

In an embodiment, the apparatus further includes a fifth determination module configured to, after it is determined that the current filtering mode does not satisfy the decision factor correction condition, determine, according to the decision factor before correction, whether to use the new APS of the current filtering mode.

In an embodiment, the apparatus further includes a first updating module configured to, after it is determined, according to the corrected decision factor, that the new APS of the current filtering mode needs to be used, update target historical filtering parameters corresponding to the target filtering unit among historical filtering parameters of the current filtering mode to the new APS of the current filtering mode.

In an embodiment, the apparatus further includes a second updating module configured to, in the case where the target historical filtering parameters are not empty, update empty historical filtering parameters among the historical filtering parameters of the current filtering mode to the target historical filtering parameters.

In an embodiment, the apparatus further includes a transmission module configured to, after it is determined, according to the corrected decision factor, that the new APS of the current filtering mode needs to be used, transmit the new APS of the current filtering mode in a bitstream.

In an embodiment, the target filtering unit includes at least one of the following: a slice, a tile, a CTU, or a sub-picture.

In an embodiment, the decision factor includes a Lagrangian factor.

The filtering parameter processing apparatus provided in this embodiment may perform the filtering parameter processing method in the preceding embodiments. The filtering parameter processing apparatus provided in this embodiment has implementation principles and technical effects that are similar to those of the preceding embodiments, and the details are not repeated here.

FIG. 17 is a diagram illustrating the structure of another filtering parameter processing apparatus according to an embodiment. As shown in FIG. 17, the filtering parameter processing apparatus provided in this embodiment includes the following modules: a first determination module 171, a first updating module 172, and a second updating module 173.

The first determination module 171 is configured to determine a new APS of a current filtering mode of a target filtering unit.

The first updating module 172 is configured to, in response to determining that the new APS of the current filtering mode is used, update target historical filtering parameters corresponding to the target filtering unit among historical filtering parameters of the current filtering mode to the new APS of the current filtering mode.

The second updating module 173 is configured to, in the case where the target historical filtering parameters are not empty, update empty historical filtering parameters among the historical filtering parameters of the current filtering mode to the target historical filtering parameters.

In an embodiment, the second updating module 173 is configured to determine the empty historical filtering parameters among the historical filtering parameters of the current filtering mode according to a preset rule; and update the empty historical filtering parameters among the historical filtering parameters to the target historical filtering parameters.

In an embodiment, the preset rule includes at least one of the following: traversing the historical filtering parameters of the current filtering mode in order of generation time from new to old; or traversing the historical filtering parameters of the current filtering mode in order of generation time from old to new.

In an embodiment, the apparatus further includes a second determination module configured to, when it is determined that the current filtering mode satisfies the decision factor correction condition, determine the corrected decision factor, where the corrected decision factor is less than the decision factor before correction; and a third determination module configured to determine, according to the corrected decision factor, whether to use the new APS of the current filtering mode.

In an embodiment, the decision factor includes a Lagrangian factor.

The filtering parameter processing apparatus provided in this embodiment may perform the filtering parameter processing method in the preceding embodiments. The filtering parameter processing apparatus provided in this embodiment has implementation principles and technical effects that are similar to those of the preceding embodiments, and the details are not repeated here.

FIG. 18 is a diagram illustrating the structure of another filtering parameter processing apparatus according to an embodiment. As shown in FIG. 18, the filtering parameter processing apparatus provided in this embodiment includes the following modules: an acquisition module 181, a first updating module 182, and a second updating module 183.

The acquisition module 181 is configured to acquire a new APS of a current filtering mode of a target filtering unit.

The first updating module 182 is configured to update target historical filtering parameters corresponding to the target filtering unit among historical filtering parameters of the current filtering mode to the new APS of the current filtering mode.

The second updating module 183 is configured to, in the case where the target historical filtering parameters are not empty, update empty historical filtering parameters among the historical filtering parameters of the current filtering mode to the target historical filtering parameters.

FIG. 19 is a diagram illustrating the structure of an electronic device according to an embodiment. As shown in FIG. 19, the electronic device includes a processor 60. The electronic device may further include a memory 61 and a communication interface 62. One or more processors 60 may be included in the electronic device. One processor 60 is shown as an example in FIG. 19. The processor 60, the memory 61, and the communication interface 62 in the electronic device may be connected via a bus or in other manners. The connection via a bus is shown as an example in FIG. 19. The bus represents one or more of several types of bus structures, including a memory bus or a memory controller, a peripheral bus, an Accelerated Graphics Port, a processor, and a local bus using any bus structure among multiple bus structures.

As a computer-readable storage medium, the memory 61 may be configured to store software programs, computer-executable programs, and modules, such as program instructions/modules corresponding to the method of the embodiments of the present application. The processor 60 executes software programs, instructions and modules stored in the memory 61 to perform at least one function application and data processing of the electronic device, that is, to perform the preceding method.

The memory 61 may include a program storage region and a data storage region. The program storage region may store an operating system and an application program required by at least one function. The data storage region may store data created depending on the use of a terminal. Additionally, the memory 61 may include a high-speed random-access memory and may further include a non-volatile memory such as at least one magnetic disk memory, a flash memory, or another non-volatile solid-state memory. In some examples, the memory 61 may include memories that are remotely disposed relative to the processor 60, and these remote memories may be connected to the electronic device via a network. Examples of the preceding network include, but are not limited to, the Internet, an intranet, a network, a mobile communication network, and a combination thereof.

The communication interface 62 may be configured to receive and send data.

An embodiment of the present application further provides a computer-readable storage medium. The computer-readable storage medium stores a computer program that, when executed by a processor, causes the processor to perform the method provided in any embodiment of the present application.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a nonexhaustive list): an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any appropriate medium including, but not limited to, a radio medium, a wire, an optical cable, radio frequency (RF), and the like, or any appropriate combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case relating to the remote computer, the remote computer may be connected to the user computer via any type of network (including a local area network (LAN) or a wide area network (WAN)) or may be connected to an external computer (for example, via the Internet through an Internet service provider).

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A filtering parameter processing method, comprising:

   determining a new adaptation parameter set (APS) of a current filtering mode of a target filtering unit;
   determining a corrected decision factor after the current filtering mode is determined to satisfy a decision factor correction condition, wherein the corrected decision factor is less than a decision factor before correction; and
   determining, according to the corrected decision factor, whether to use the new APS of the current filtering mode.

2. The method of claim 1, wherein the current filtering mode comprises at least one of the following: luma adaptive loop filter (ALF), chroma ALF, cross-component adaptive loop filter (CCALF) Cb, or CCALF Cr.

3. The method of claim 1 or 2, further comprising: determining whether the current filtering mode satisfies the decision factor correction condition.

4. The method of claim 3, wherein determining whether the current filtering mode satisfies the decision factor correction condition comprises at least one of the following:

   a number of available historical candidate sets for the current filtering mode is less than a preset threshold; or
   using a new APS of a preceding filtering mode.

5. The method of claim 4, wherein preset thresholds corresponding to different filtering modes are the same, or preset thresholds corresponding to different filtering modes are different.

6. The method of claim 1 or 2, wherein determining the corrected decision factor comprises: determining a product of a preset weight and the decision factor before correction as the corrected decision factor, wherein the preset weight is a number less than 1 and greater than zero.

7. The method of claim 6, wherein preset weights corresponding to different filtering modes are the same, or preset weights corresponding to different filtering modes are different.

8. The method of claim 1 or 2, further comprising: determining, after the current filtering mode is determined not to satisfy the decision factor correction condition, whether to use the new APS of the current filtering mode according to the decision factor before correction.

9. The method of claim 1 or 2, further comprising: after determining, according to the corrected decision factor, that the new APS of the current filtering mode needs to be used, updating target historical filtering parameters corresponding to the target filtering unit among historical filtering parameters of the current filtering mode to the new APS of the current filtering mode.

10. The method of claim 9, further comprising: in a case where the target historical filtering parameters are not empty, updating empty historical filtering parameters among the historical filtering parameters of the current filtering mode to the target historical filtering parameters.

11. The method of claim 1 or 2, further comprising: after determining, according to the corrected decision factor, that the new APS of the current filtering mode needs to be used, transmitting the new APS of the current filtering mode in a bitstream.

12. The method of claim 1 or 2, wherein a decision factor comprises a Lagrangian factor.

13. The method of claim 1 or 2, wherein the target filtering unit comprises at least one of the following: a slice, a tile, a coding tree unit (CTU), or a sub-picture.

14. A filtering parameter processing method, comprising:

   determining a new adaptation parameter set (APS) of a current filtering mode of a target filtering unit;
   in response to determining that the new APS of the current filtering mode is used, updating target historical filtering parameters corresponding to the target filtering unit among historical filtering parameters of the current filtering mode to the new APS of the current filtering mode; and
   in a case where the target historical filtering parameters are not empty, updating empty historical filtering parameters among the historical filtering parameters of the current filtering mode to the target historical filtering parameters.

15. The method of claim 14, wherein updating the empty historical filtering parameters among the historical filtering parameters of the current filtering mode to the target historical filtering parameters comprises:

   determining, according to a preset rule, the empty historical filtering parameters among the historical filtering parameters of the current filtering mode; and

updating the empty historical filtering parameters among the historical filtering parameters of the current filtering mode to the target historical filtering parameters.

**16.** The method of claim 15, wherein the preset rule comprises at least one of the following:

traversing the historical filtering parameters of the current filtering mode in order of generation time from new to old; or
traversing the historical filtering parameters of the current filtering mode in order of generation time from old to new.

**17.** The method of any one of claims 14 to 16, further comprising:

in response to determining that the current filtering mode satisfies a decision factor correction condition, determining a corrected decision factor, wherein the corrected decision factor is less than a decision factor before correction; and
determining, according to the corrected decision factor, whether to use the new APS of the current filtering mode.

**18.** A filtering parameter processing method, comprising:

acquiring a new adaptation parameter set (APS) of a current filtering mode of a target filtering unit;
updating target historical filtering parameters corresponding to the target filtering unit among historical filtering parameters of the current filtering mode to the new APS of the current filtering mode; and
in a case where the target historical filtering parameters are not empty, updating empty historical filtering parameters among the historical filtering parameters of the current filtering mode to the target historical filtering parameters.

**19.** An electronic device, comprising a processor, wherein when executing a computer program, the processor performs the filtering parameter processing method of any one of claims 1 to 13, the filtering parameter processing method of any one of claims 14 to 17, or the filtering parameter processing method of claim 18.

**20.** A computer-readable storage medium storing a computer program executable by a processor to enable the processor to perform the filtering parameter processing method of any one of claims 1 to 13, the filtering parameter processing method of any one of claims 14 to 17, or the filtering parameter processing method of claim 18.

**FIG. 1**

**FIG. 2**

**FIG. 3**

alf_ luma_ filter_signal _flag
1  0
$S_i^{LumaALF}$

alf_chroma _filter_signal _flag
1  0
$S_i^{ChromaALF}$

alf_cc_ cb_filter_si gnal_ flag
1  0
$S_i^{CCALF\ Cb}$

alf_cc_ cr_filter_si gnal_ flag
1  0
$S_i^{CCALF\ Cr}$

**FIG. 4**

alf_enable_flag=0 ⟶ Skip ALF

alf_enable_flag=1

New ALF APS → Index | Filtering coefficient

Offline-trained filter sets (Only the luma ALF has the offline-trained filter sets) → Index

$APS_7^{ALF}$

$APS_6^{ALF}$

...

$APS_0^{ALF}$

ALF APS historical candidate sets

→ Index

RDO | Optimal filtering parameter

**FIG. 5**

```
┌─────────────────────────────────────────┐
│ Determine a new APS of a current filtering │ ⌐ Step 601
│     mode of a target filtering unit       │
└─────────────────────────────────────────┘
                    │
                    ▼
┌─────────────────────────────────────────┐
│ After it is determined that the current  │ ⌐ Step 602
│   filtering mode satisfies a decision    │
│ factor correction condition, determine a │
│        corrected decision factor         │
└─────────────────────────────────────────┘
                    │
                    ▼
┌─────────────────────────────────────────┐
│ According to the corrected decision      │ ⌐ Step 603
│ factor, determine whether to use the new │
│    APS of the current filtering mode     │
└─────────────────────────────────────────┘
```

**FIG. 6**

| | APS |
|---|---|
| Luma APS | ✕ |
| Chroma APS | ✓ |
| CCALF Cb APS | ✕ |
| CCALF Cr APS | ✕ |

A schematic diagram of the ALF APSs obtained without using the filtering parameter processing method provided in this embodiment

| | APS |
|---|---|
| Luma APS | ✓ |
| Chroma APS | ✓ |
| CCALF Cb APS | ✓ |
| CCALF Cr APS | ✓ |

A schematic diagram of the ALF APSs obtained using the filtering parameter processing method provided in this embodiment

**FIG. 7**

ALF_in

Calculate a new APS of luma ALF and a new APS of chroma ALF of the target filtering unit — Step 801

Determine whether the luma ALF decision-making is enabled — Step 802 — No

Yes

Perform the luma ALF decision-making — Step 803

Is the new APS of the luma ALF used?

Yes → alf_luma_filter_signal_flag=1

No → alf_luma_filter_signal_flag=0

Does the chroma ALF satisfy a Lagrangian factor correction condition? — Step 804a — No

Yes — Step 804b

$$l_{Chroma\_ALF}^{Chroma} = k_{Chroma\_ALF} l_{VVC}^{Chroma}$$

Perform the chroma ALF decision-making — Step 804c

Is the new APS of the chroma ALF used?

Yes → alf_chroma_filter_signal_flag=1

No → alf_chroma_filter_signal_flag=0

Reconstruct the image after the luma ALF and the chroma ALF — Step 805

Calculate a new APS of CCALF Cb and a new APS of CCALF Cr of the target filtering unit — Step 806

Does CCALF Cb satisfy a Lagrangian factor correction condition? — Step 807a — No

Yes — Step 807b

$$l_{CCALF\_Cb}^{Cb} = k_{CCALF\_Cb} l_{VVC}^{Cb}$$

Is the new APS of CCALF Cb used? — Step 807c

Is the new APS of CCALF Cb used?

Yes → alf_cc_cb_filter_signal_flag=1

No → alf_cc_cb_filter_signal_flag=0

Does CCALF Cr satisfy a Lagrangian factor correction condition? — Step808a — No

Yes

$$l_{CCALF\_Cr}^{Cr} = k_{CCALF\_Cr} l_{VVC}^{Cr}$$ — Step 808b

Perform the CCALF Cr decision-making — Step 808c

Is the new APS of CCALF Cr used?

Yes → alf_cc_cr_filter_signal_flag=1

No → alf_cc_cr_filter_signal_flag=0

Reconstruct the image after CCALF Cb and CCALF Cr — Step 809

if alf_luma_filter_signal_flag ||alf_chroma_filter_signal_flag ||alf_cc_cb_filter_signal_flag ||alf_cc_cr_filter_signal_flag==1 — No

Transmit the current new APS — Step 810

ALF_out

**FIG. 8**

Determine a new APS of a current filtering mode of a target filtering unit — Step 901

After it is determined that the current filtering mode satisfies a decision factor correction condition, determine a corrected decision factor — Step 902

According to the corrected decision factor, determine whether to use the new APS of the current filtering mode — Step 903

After it is determined, according to the corrected decision factor, that the new APS of the current filtering mode needs to be used, update target historical filtering parameters corresponding to the target filtering unit among historical filtering parameters of the current filtering mode to the new APS of the current filtering mode — Step 904

In the case where the target historical filtering parameters are not empty, update empty historical filtering parameters among the historical filtering parameters of the current filtering mode to the target historical filtering parameters — Step 905

**FIG. 9**

$$APS_7^{ALF} \quad \begin{array}{|c|} \hline S_i^{LumaALF} \\ \hline S_i^{ChromaALF} \\ \hline S_i^{CCALF\ Cb} \\ \hline S_i^{CCALF\ Cr} \\ \hline \end{array} \quad APS_6^{ALF} \quad \begin{array}{|c|} \hline S_i^{LumaALF} \\ \hline S_i^{ChromaALF} \\ \hline S_i^{CCALF\ Cb} \\ \hline S_i^{CCALF\ Cr} \\ \hline \end{array} \quad \cdots \cdots \quad APS_0^{ALF} \quad \begin{array}{|c|} \hline S_i^{LumaALF} \\ \hline S_i^{ChromaALF} \\ \hline S_i^{CCALF\ Cb} \\ \hline S_i^{CCALF\ Cr} \\ \hline \end{array}$$

$$APS_i^{ALF}$$

**FIG. 10**

| | APS0 | APS1 | APS2 | APS3 | Old APS4 | APS5 | APS6 | APS7 |
|---|---|---|---|---|---|---|---|---|
| Luma APS | √ | √ | X | √ | √ | √ | X | √ |
| Chroma APS | X | √ | √ | X | √ | √ | X | X |
| CCALF Cb APS | X | X | X | √ | X | X | √ | X |
| CCALF Cr APS | √ | X | X | X | √ | X | X | X |

New APS4

| |
|---|
| √ |
| X |
| X |
| X |

| | APS0 | APS1 | APS2 | APS3 | Old APS4 | APS5 | APS6 | APS7 |
|---|---|---|---|---|---|---|---|---|
| Luma APS | √ | √ | X | √ | √ | √ | X | √ |
| Chroma APS | X | √ | √ | X | √ | √ | X | X |
| CCALF Cb APS | X | X | X | √ | X | X | √ | X |
| CCALF Cr APS | √ | X | X | X | √ | X | X | X |

New APS4

| |
|---|
| √ |
| X |
| X |
| X |

| | APS0 | APS1 | APS2 | APS3 | New APS4 | APS5 | APS6 | APS7 |
|---|---|---|---|---|---|---|---|---|
| Luma APS | √ | √ | √ | √ | √ | √ | X | √ |
| Chroma APS | X | √ | √ | √ | X | √ | X | X |
| CCALF Cb APS | X | X | X | √ | X | X | √ | X |
| CCALF Cr APS | √ | X | X | √ | X | X | X | X |

# FIG. 11

Determine a new APS of a current filtering mode of a target filtering unit — Step 1201

In response to determining that the new APS of the current filtering mode is used, update target historical filtering parameters corresponding to the target filtering unit among historical filtering parameters of the current filtering mode to the new APS of the current filtering mode — Step 1202

In the case where the target historical filtering parameters are not empty, update empty historical filtering parameters among the historical filtering parameters of the current filtering mode to the target historical filtering parameters — Step 1203

**FIG. 12**

**FIG. 13**

Step 1401

Determine whether an APS with an ID of i exists in the APS historical candidate sets

Yes → Directly insert a new APS with an ID of i

No

Perform luma APS insertion — Step 1402

Perform chroma APS insertion — Step 1403

Perform CCALF Cb APS insertion — Step 1404

Perform CCALF Cr APS insertion — Step 1405

Insert a new APS — Step 1406

**FIG. 14**

Acquire a new APS of a current filtering mode of a target filtering unit — Step 1501

Update target historical filtering parameters corresponding to the target filtering unit among historical filtering parameters of the current filtering mode to the new APS of the current filtering mode — Step 1502

In the case where the target historical filtering parameters are not empty, update empty historical filtering parameters among the historical filtering parameters of the current filtering mode to the target historical filtering parameters — Step 1503

**FIG. 15**

161

First
determination
module

162

Second
determination
module

163

Third
determination
module

**FIG. 16**

171

First
determination
module

172

First updating
module

173

Second updating
module

**FIG. 17**

181

Acquisition
module

182

First updating
module

183

Second updating
module

**FIG. 18**

Memory 61

Communication
interface 62

Processor 60

**FIG. 19**

# EP 4 657 853 A1

<table>
<tr><td colspan="2">INTERNATIONAL SEARCH REPORT</td><td>International application No.<br><br>**PCT/CN2023/129906**</td></tr>
</table>

**A.    CLASSIFICATION OF SUBJECT MATTER**

H04N 19/124(2014.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, DWPI, VEN, JPTXT, WOTXT, USTXT, IEEE, CNKI, 万方 WANFANG, 必应, BING, JVET: 中兴, 自适应参数集, 自适应环路滤波, 数目, 数量, 不足, 少, 充盈, 空, 空缺, 阀值, 门限, 阈值, 预定值, 改变, 更新, 修改, 修正, 缩放, 调整, 决策, 拉格朗日, 率失真, 候选, 环路滤波, 历史, 历史滤波参数, 滤波参数, 色度, 小于, 新, 历史, ALF, APS, RDO, chroma, adaptive loop filter, insufficient, chroma ALF, number, history, new, scaling, factor, adjust, Lagrange

**C.    DOCUMENTS CONSIDERED TO BE RELEVANT**

| Category* | Citation of document, with indication, where appropriate, of the relevant passages | Relevant to claim No. |
|---|---|---|
| PX | ZOU, Wenjie et al. "AhG10: Lagrange multiplier optimization for chroma ALF and CCALF" *JVET-AD0136-v1*, 14 April 2023 (2023-04-14), abstract and text, sections 1-4 | 1-20 |
| PX | XIE, Shaowei et al. "AhG10: Lagrange multiplier optimization for chroma ALF and CCALF" *JVET-AE0123-v1*, 04 July 2023 (2023-07-04), abstract and text, sections 1-4 | 1-20 |
| PX | XIE, Shaowei et al. "AhG10: Lagrange multiplier optimization for chroma ALF and CCALF" *JVET-AF0122-v1*, 26 September 2023 (2023-09-26), abstract and text, sections 1-4 | 1-20 |
| A | US 2021195183 A1 (QUALCOMM INC.) 24 June 2021 (2021-06-24) description, paragraphs 57-155, and figures 1-11C | 1-20 |
| A | CN 115462072 A (QUALCOMM INC.) 09 December 2022 (2022-12-09) entire document | 1-20 |

☑ Further documents are listed in the continuation of Box C.        ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 January 2024** | **03 February 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/129906** |

### C. DOCUMENTS CONSIDERED TO BE RELEVANT

| Category* | Citation of document, with indication, where appropriate, of the relevant passages | Relevant to claim No. |
| --- | --- | --- |
| A | US 2015016551 A1 (PANASONIC INTELLECTUAL PROPERTY CORPORATION OF AMERICA) 15 January 2015 (2015-01-15) entire document | 1-20 |
| A | CN 104247417 A (QUALCOMM INC.) 24 December 2014 (2014-12-24) entire document | 1-20 |

Form PCT/ISA/210 (second sheet) (July 2022)

**INTERNATIONAL SEARCH REPORT**
Information on patent family members

International application No.

**PCT/CN2023/129906**

| Patent document cited in search report | | | Publication date (day/month/year) | Patent family member(s) | | | Publication date (day/month/year) |
|---|---|---|---|---|---|---|---|
| US | 2021195183 | A1 | 24 June 2021 | US | 11716468 | B2 | 01 August 2023 |
| CN | 115462072 | A | 09 December 2022 | BR | 112022022834 | A2 | 13 December 2022 |
| | | | | WO | 2021236912 | A1 | 25 November 2021 |
| | | | | US | 2021368169 | A1 | 25 November 2021 |
| | | | | KR | 20230012489 | A | 26 January 2023 |
| | | | | EP | 4154528 | A1 | 29 March 2023 |
| US | 2015016551 | A1 | 15 January 2015 | US | 2020236404 | A1 | 23 July 2020 |
| | | | | US | 11089336 | B2 | 10 August 2021 |
| | | | | US | 10595049 | B2 | 17 March 2020 |
| | | | | WO | 2013144144 | A1 | 03 October 2013 |
| CN | 104247417 | A | 24 December 2014 | US | 2013272425 | A1 | 17 October 2013 |
| | | | | US | 9344723 | B2 | 17 May 2016 |
| | | | | EP | 2837182 | A1 | 18 February 2015 |
| | | | | WO | 2013154912 | A1 | 17 October 2013 |
| | | | | JP | 2015516764 | A | 11 June 2015 |

Form PCT/ISA/210 (patent family annex) (July 2022)